# EUROPEAN PATENT APPLICATION

(11) **EP 3 951 422 A1**
(43) Date of publication of application: **09.02.2022**
(21) Application number: 19920889.3
(22) Date of filing: 04.04.2019
(51) Int. Cl.: G01S 7/481

(54) **LASER RADAR, AND INSTALLATION AND ADJUSTMENT METHOD THEREFOR**

(30) Priority: 25.03.2019 CN 201910225399
(71) Applicant: Suteng Innovation Technology Co., Ltd., Shenzhen, Guangdong 518000 (CN)
(72) Inventor: ZHOU, Yong, Shenzhen, Guangdong 518000 (CN); HOU, Songshan, Shenzhen, Guangdong 518000 (CN); WANG, Ji, Shenzhen, Guangdong 518000 (CN)
(74) Representative: Ran, Handong
(86) International application number: PCT/CN2019/081578
(87) International publication number: WO 2020/191809

(57) **Abstract**

A lidar and a lidar adjustment method are provided. The lidar includes at least one transceiver component, the transceiver component includes an emitting assembly, a beam splitting assembly, and a receiving assembly. The emitting assembly emits an outgoing light signal, which passes through the beam splitting assembly and then reaches a detection region. The outgoing light signal is reflected by an object in the detection region and becomes a reflected light signal. The reflected light signal is received by the receiving assembly after being deflected by the beam splitting assembly.

## Description

### RELATED APPLICATIONS

The present application is a continuation of International Application No. PCT/CN2019/081578, filed April 4, 2019, which claims priority to Chinese Patent Application No. 201910225399.6, filed March 25, the entire contents of each are incorporated herein by reference.

### TECHNICAL FIELD

The present application relates to the field of lidar, and in particular, to a lidar and an adjustment method thereof.

### BACKGROUND

lidar is a radar system that emits a laser beam to detect a target object's position, velocity, and other characteristic quantities. Its working principle is that a transmitting assembly first emits an outgoing light signal towards a target object, and then a receiving assembly receives the light signal reflected from the target object. The reflected light signal is then compared with the outgoing light signal. After processing, relevant information of the target object, such as parameters of distance, orientation, height, speed, attitude, and even shape of the target object, can be obtained.

Currently, because sizes of laser emission aperture and laser receiving aperture of coaxial optical path of lidar are limited, the detection effect and detection distance of lidar are limited. As a result, the coaxial optical path of lidar frequently fails to meet detection requirements. In addition, the field of view of a single emitting assembly and the field of view of a single receiving assembly in a lidar under the coaxial design are insufficient to meet the detection requirements. Therefore, some lidars adopt multiple emitting assemblies to splice the emitting field of view and multiple receiving assemblies to splice the receiving field of view to expand their scanning ranges.

Usually, multiple emitting assemblies form an emitting system, and multiple receiving assemblies form a receiving system. The emitting system and the receiving system may be adjusted independently. However, a lidar includes many optical components accurately and compactly assembled within a limited inner space. The optical components may mutually affect performances of each other during adjustment. Consequently, adjusting and calibrating an existing lidar is complicated, difficult, and inefficient. In addition, existing lidar design causes high maintenance and service costs.

### SUMMARY

According to one embodiment of the present disclosure, a lidar and a method of adjusting a lidar are provided.

According to a first aspect of the present application, a lidar is provided, the lidar includes at least one transceiver component, the transceiver component includes an emitting assembly, a beam splitting assembly, a receiving assembly.

The emitting assembly emits an outgoing light signal which, after passing through the beam splitting assembly, is emitted into a detection region where it is reflected by a target object to obtain a reflected light signal, and the reflected light signal, after being deflected by the beam splitting assembly, is received by the receiving assembly.

In some embodiments, the transceiver component further includes a reflector assembly. The reflector assembly is disposed between the beam splitting assembly and the receiving assembly, the reflected light signal is directed to the receiving assembly after passing through the beam splitting assembly and being reflected by the reflector assembly.

In some embodiments, the transceiver component further includes a base. The beam splitting assembly includes a beamsplitter supporting assembly and a beamsplitter, the beamsplitter supporting assembly and the base are an integrated structure or fixedly connected, the beamsplitter is fixed by the beamsplitter supporting assembly.

In some embodiments, the reflector assembly includes a reflector supporting assembly and a reflector, the reflector is fixed by the reflector supporting assembly.

In some embodiments, the reflector supporting assembly is fixedly connected with the beamsplitter supporting assembly after being aligned with the beamsplitter supporting assembly.

In some embodiments, the receiving assembly is fixedly connected with the reflector supporting assembly after being aligned with the reflector supporting assembly.

In some embodiments, the emitting assembly is fixedly connected to the base after being aligned with the beam splitting assembly.

In some embodiments, the emitting assembly includes an emission board supporting assembly and an emission board, the emission board is fixed by the emission board supporting assembly.

In some embodiments, the emission board supporting assembly includes an emission board adjustment cover and an emission board adjustment base, the emission board is clamped and fixed by the emission board adjustment cover and the emission board adjustment base, the emission board adjustment base is fixed on the base after aligning the emission board with the beam splitting assembly.

In some embodiments, the transceiver component further includes a collimating assembly disposed between the emitting assembly and the beam splitting assembly, the outgoing light signal emitted by the emitting assembly is directed to the beam splitting assembly after being collimated by the collimating assembly.

In some embodiments, the transceiver further includes a base, the collimating assembly includes a fast axis collimating lens and a slow axis collimating lens, the fast axis collimating lens and the base are an integrated structure or fixedly connected, the slow axis collimating lens and the emitting assembly are fixed on the base after aligning the slow axis collimating lens and the emitting assembly with the fast axis collimating lens.

In some embodiments, the transceiver further includes a reflector assembly disposed between the emitting assembly and the beam splitting assembly, the outgoing light signal emitted by the emitting assembly is directed to the beam splitting assembly after being reflected by the reflector assembly.

In some embodiments, the lidar further includes a base, the beam splitting assembly includes a beamsplitter supporting assembly and a beamsplitter, the beamsplitter supporting assembly and the base are an integrated structure or fixedly connected, wherein the beamsplitter is fixed by the beamsplitter supporting assembly.

In some embodiments, the reflector assembly is fixedly connected with the base after being aligned with the beam splitting assembly, the emitting assembly is fixedly connected with the reflector assembly after being aligned with the reflector assembly, the receiving assembly is fixedly connected with the beam splitting assembly after being aligned with the beam splitting assembly.

In some embodiments, the emitting assembly further includes an incident fiber configured to direct laser, the transceiver component further includes a collimating assembly disposed between the emitting assembly and the reflector assembly, a light signal emitted by the incident fiber is directed to the reflector assembly after being collimated by the collimating assembly.

In some embodiments, the receiving assembly includes at least one of APD, APD array, MPPC, SPAD, PMT, SIPM.

In some embodiments, the lidar further includes a bottom plate, the at least one transceiver is fixed on the bottom plate based on an installation angle.

In some embodiments, the lidar further includes a galvanometer assembly, the galvanometer is fixed on the bottom plate.

In some embodiments, the lidar further includes a hardware component, the hardware component comprises a PCB board, a control board, and a bracket, the backet is fixed on the bottom plate, the PCB board is fixedly connected with the bracket, the control board is fixedly connected with the bracket.

According to a second aspect of the present application, a lidar adjustment method is provided, the method includes:
aligning a light exit port of an emitting assembly with a first port of a beam splitting assembly, the emitting assembly being fixed on a base, the beam splitting assembly and the base being an integrated structure or fixedly connected;
aligning a light input port of a reflector assembly with a second port of the beam splitting assembly, a reflector supporting assembly of the reflector assembly being fixed on top of the beam splitting assembly;
aligning a light input port of a receiving assembly with a light exit port of the reflector assembly;
receiving a reflected light signal emitting towards the receiving assembly, an outgoing light signal from the emitting assembly is incident on the first port of the beam splitting assembly, outgoing from a third port of the beam splitting assembly, and emits to a detection region where it is reflected by a target object to obtain a reflected light signal, the reflected light signal is incident on the third port of the beam splitting assembly, outgoing from the second port of the beam splitting assembly after being deflected by the beam splitting assembly, the reflected light signal is emitted towards the receiving assembly after being reflected by a reflector of the reflector assembly;
comparing the reflected light signal with a preset light signal threshold;
when the reflected light signal is lower than the preset light signal threshold, adjusting at least one of a position of the reflector, an angle of the reflector, or a position of the receiving assembly;
when the reflected light signal is greater than or equal to the preset light signal threshold, determining a current position of the reflector as a desired position of the reflector, a current angle of the reflector as a desired position of the reflector, a current position of the receiving assembly as a desired position of the receiving assembly;
mounting the reflector on the reflector supporting assembly based on the desired position and the desired angle of the reflector;
connecting the receiving assembly with the reflector assembly based on the desired position of the receiving assembly.

In some embodiments, the beam splitting assembly and the base are an integrated structure or fixedly connected, the light exit port of the emitting assembly is aligned with the first port of the beam splitting assembly, the emitting assembly is fixedly mounted on the base, the method comprising:
the beam splitting assembly and the base are an integrated structure or fixedly connected, fixing a fast axis collimating lens on the base and adjusting a position of the emitting assembly so that a light spot being compressed to a preset state in the fast axis after the outgoing light signal emitted by the emitting assembly passing the fast axis collimating lens;
a slow axis collimating lens is placed between the emitting assembly and the beam splitting assembly, adjusting at least one of the slow axis collimating lens or a position of an emission board so that a light spot being compressed to a preset state in the slow axis after the outgoing light signal emitted by the emitting assembly passing the slow axis collimating lens;
fixing the emitting assembly and the slow axis collimating lens on the base.

According to a third aspect of the present application, a lidar adjustment method is provided. The method includes:
aligning a light exit port of an emitting assembly with a first port of a beam splitting assembly, the emitting assembly being fixed on a base, the beam splitting assembly and the base being an integrated structure or fixedly connected;
aligning a light input port of a receiving assembly with a second port of the beam splitting assembly to receive a reflected light signal emitting towards the receiving assembly; an outgoing light signal from the emitting assembly is incident on the first port of the beam splitting assembly, outgoing from a third port of the beam splitting assembly, and emits to a detection region where it is reflected by a target object to obtain a reflected light signal, the reflected light signal is incident on the third port of the beam splitting assembly, outgoing from the second port of the beam splitting assembly after being deflected by the beam splitting assembly, the reflected light signal is emitted towards the receiving assembly;
comparing the reflected light signal with a preset light signal threshold;
when the reflected light signal is lower than the preset light signal threshold, adjusting a position of the receiving assembly;
when the reflected light signal is greater than or equal to the preset light signal threshold, determining a current position of the receiving assembly as a desired position of the receiving assembly;
mounting the receiving assembly based on the desired position of the receiving assembly.

According to a fourth aspect of the present application, a lidar adjustment method is provided. The method includes:
a beam splitting assembly and a base being an integrated structure or fixedly connected;
aligning a light exit port of a emitting assembly with a light input port of a reflector assembly, a light exit port of the reflector assembly being aligned a first port of a beam splitting assembly, adjusting at least one of a position of the emitting assembly, a position of the reflector assembly, or an angle of a reflector of the reflector assembly to align an outgoing light signal emitted by the emitting assembly and reflected by the reflector assembly with the first port of the beam splitting assembly, the reflector assembly being mounted on the base, the emitting assembly being mounted with the reflector assembly;
aligning a light input port of a receiving assembly with a second port of the beam splitting assembly to receive a reflected light signal emitting towards the receiving assembly; an outgoing light signal from the emitting assembly is incident on the first port of the beam splitting assembly, outgoing from a third port of the beam splitting assembly, and emits to a detection region where it is reflected by a target object to obtain a reflected light signal, the reflected light signal is incident on the third port of the beam splitting assembly, outgoing from the second port of the beam splitting assembly after being deflected by the beam splitting assembly, the reflected light signal is emitted towards the receiving assembly;
comparing the reflected light signal with a preset light signal threshold;
when the reflected light signal is lower than the preset light signal threshold, adjusting a position of the receiving assembly;
when the reflected light signal is greater than or equal to the preset light signal threshold, determining a current position of the receiving assembly as a desired position of the receiving assembly;
mounting the receiving assembly based on the desired position of the receiving assembly.

The above-mentioned lidar and lidar adjustment method, the lidar includes at least one transceiver component, the transceiver component includes a emitting assembly, a beam splitting assembly, a receiving assembly, when the lidar detects a detection region, the outgoing light signal from the emitting assembly is transmitted to the detection region after passing through the beam splitting assembly, and a reflected light signal is reflected by the target object in the detection region, and the reflected light signal is received by the receiving assembly after being deflected by the beam splitting assembly. The reflected light signal is deflected by the beam splitting module and then received by the receiving assembly. The lidar includes at least one transceiver component, and the emitting assembly, beam splitting assembly, receiving assembly of each transceiver component can be pre-tuned before assembly. When replacing a damaged emitting assembly or receiving assembly during maintenance, only the damaged part needs to be replaced and the corresponding transceiver component needs to be tuned, so there is no need to retune all emitting assemblies and receiving assemblies, which facilitates product maintenance and reduces maintenance costs. At the same time, each transceiver component can be installed and adjusted separately to ensure that the emitting and receiving performances of each transceiver component are good, and thus the detection effect of lidar can be reliably guaranteed.

### BRIEF DESCRIPTION OF THE DRAWINGS

One or more embodiments are illustrated exemplarily by the pictures in the accompanying drawings corresponding thereto, and these exemplary illustrations do not constitute a limitation on the embodiment, and elements in the accompanying drawings having the same reference numerical designation are indicated as similar elements, and the drawings in the accompanying drawings do not constitute a limitation of scale unless specifically stated.
FIG. 1 is a schematic diagram of a lidar according to some embodiments of the present application;
FIG. 2 is a schematic diagram of a lidar's transceiver component according to some embodiments of the present application;
FIG. 3 is a lidar adjustment method according to some embodiments of the present application;
FIG. 4 is a schematic diagram of a lidar's transceiver component according to some embodiments of the present application;
FIG. 5 is a schematic structural diagram of a lidar's transceiver component according to some embodiments of the present application;
FIG. 6 is a cross-sectional view of a lidar's beam splitting assembly and reflector assembly according to some embodiments of the present application;
FIG. 7 is a lidar adjustment method according to some embodiments of the present application;
FIG. 8 is a schematic structural diagram of a lidar's transceiver component according to some embodiments of the present application;
FIG. 9 is a schematic structural diagram of a base plate and a scanning component of a lidar according to some embodiments of the present application;
FIG. 10 is a schematic structural diagram of a hardware component of a lidar according to some embodiments of the present application;
FIG. 11 is a lidar adjustment method according to some embodiments of the present application;

**List of reference numerals:**

| | |
|---|---|
| Transceiver component | 10 |
| Base | 100 |
| Emitting assembly | 101 |
| Emission board | 1011 |
| Emission board adjustment base | 1012 |
| Emission board adjustment cover | 1013 |
| Beam splitting assembly | 102 |
| Beam splitter supporting assembly | 1021 |
| Beam splitter | 1022 |
| Secondary beam splitter | 1023 |
| Pressing block | 1024 |
| Receiving assembly | 103 |
| Receiving board base | 1031 |
| Reflector assembly | 104 |
| Reflector supporting assembly | 1041 |
| Reflector cover | 1042 |
| Reflector | 1043 |
| Adjusting member | 1044 |
| Collimating assembly | 105 |
| Fast axis collimator barrel | 1051 |
| Slow axis collimator barrel | 1052 |
| Collimating lens barrel | 1053 |
| Focusing assembly | 106 |
| Focusing lens barrel | 1061 |
| Secondary beam splitting assembly | 107 |
| Secondary beam splitter supporting assembly | 1071 |
| Scanning component | 20 |
| Galvanometer assembly | 201 |
| Galvanometer | 2011 |
| Galvanometer support component | 2012 |
| Reflector assembly | 202 |
| Reflector | 2021 |
| Reflector support component | 2022 |
| Hardware component | 30 |
| Bracket | 301 |
| Base board | 302 |
| Control board | 303 |
| Bottom plate | 400 |

### DETAILED DESCRIPTION

In order to facilitate understanding of the present application, and in order to make the above-mentioned objects, features, and advantages of the present application more comprehensible, specific embodiments of the present application will be described in detail below with reference to the accompanying drawings. In the following description, many specific details are set forth in order to fully understand the present application, and the preferred embodiments of the present application are shown in the accompanying drawings. However, the invention can be implemented in many different forms and is not limited to the embodiments described herein. Rather, these embodiments are provided to provide a thorough understanding of the present disclosure. The present disclosure can be implemented in many other ways than described herein, and those skilled in the art can make similar improvements without departing from the content of the present application, so the present application is not limited by the specific embodiments disclosed below.

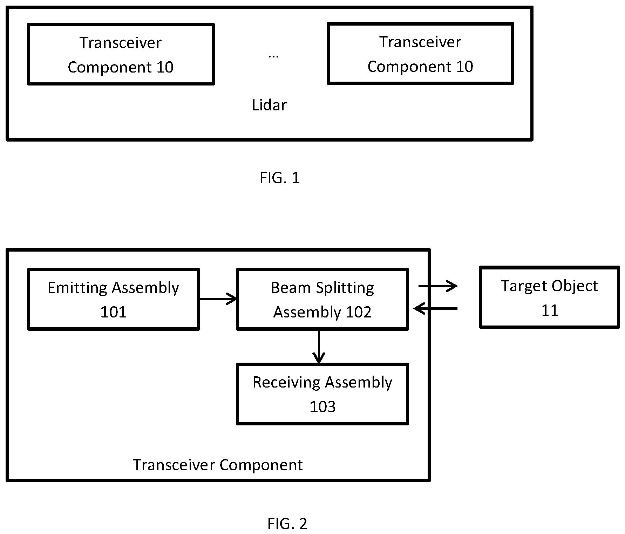

Referring to FIG. 1 and FIG. 2, a lidar according to some embodiments of the present application includes at least one transceiver component 10, the transceiver component includes an emitting assembly 101, a beam splitting assembly 102, a receiving assembly 103. The emitting assembly 101 may emit an outgoing light signal, which may pass through the beam splitting assembly 102 and then reach a detection region. The outgoing light signal may be reflected by an object in the detection region and become a reflected light signal. The reflected light signal may be received by the receiving assembly 103 after being deflected by the beam splitting assembly 102.

In some embodiments, the lidar may include one transceiver component 10, may also include a plurality of transceiver components 10. The number of transceiver components 10 may be determined by actual need, which is not limited by the present application. Each transceiver component 10 may have a limited horizontal field of view angle. When the lidar needs a larger horizontal field of view angle, for example, when a 120° horizontal field of view angle is required for the lidar, four transceiver components 10 each with a 30° field of view angle may be adopted by the lidar, in which the horizontal field of view angle of the four transceiver components 10 are combined or spliced horizontally.

The beam splitting assembly 102 may let the outgoing light signal pass through and emit, but at the same time may deflect or direct the coaxially incident reflected light signal towards the receiving assembly 103.

Specifically, the outgoing light signal emitted from the emitting assembly 101 may pass through the beam splitting assembly 102 and be emitted towards a detection region. When a target object is in the detection region, the outgoing light signal may be reflected by the target object to become the reflected light signal. The reflected light signal may enter into the beaming splitting assembly 102 when returning to the lidar. The reflected light signal may be deflected or directed by the beaming splitting assembly 102 towards the receiving assembly 103 and received by the receiving assembly 103.

In some embodiments, the emitting assembly 101 may include a laser generator and a collimating assembly. The laser generator is used to generate a laser signal. The collimating assembly is configured to collimate the laser signal generated by the laser generator and emit the collimated laser signal as the outgoing light signal. The laser generator may include a semiconductor laser, a fiber laser, and the like, or any combinations thereof. Optionally, the collimating assembly may include a spherical lens, a spherical lens group, a cylindrical lens group, a cylindrical lens and a spherical lens group, an aspherical lens, and a gradient index lens, and the like, or any combinations thereof.

Further, during installation and adjustment of the emitting assembly 101, the laser generator may first generate a laser beam. The laser beam is then collimated by the collimating assembly. When the emission assembly 101 is adjusted, a divergence angle may be calculated by measuring the spot size of the outgoing laser beam after collimation. The emitting assembly 101 is deemed properly adjusted when the divergence angle is less than or equal to a preset threshold of divergence angle; otherwise, the collimating assembly 101 may need further adjustment to reduce the divergence angle until the divergence angle is less than or equal to the present divergence angle threshold.

In some embodiments, the receiving assembly 103 may include a detector and a focusing assembly. The focusing assembly may be configured to receive and converge a reflected light signal. The detector may be configured to receive the reflected light signal converged by the focusing assembly. Additionally, the focusing assembly may also include a ball lens, a ball lens group, a cylindrical lens group or any combinations thereof. The detector may be an avalanche photo diode (APD), a silicon photomultiplier (SIPM), an APD array, a multi-pixel photon counter (MPPC), or a photomultiplier tube (PMT), and/or a single-photon avalanche diode (SPAD), etc.

Further, when the receiving assembly 103 is installed and adjusted, a laser beam may first be inputted to the focusing assembly. When it is determined that the laser beam is converged on the surface of the detector after passing through the focusing assembly, the receiving assembly 103 may be deemed properly adjusted. Otherwise, the adjustment of the focusing assembly may be continued until the laser beam is converged on the surface of the detector.

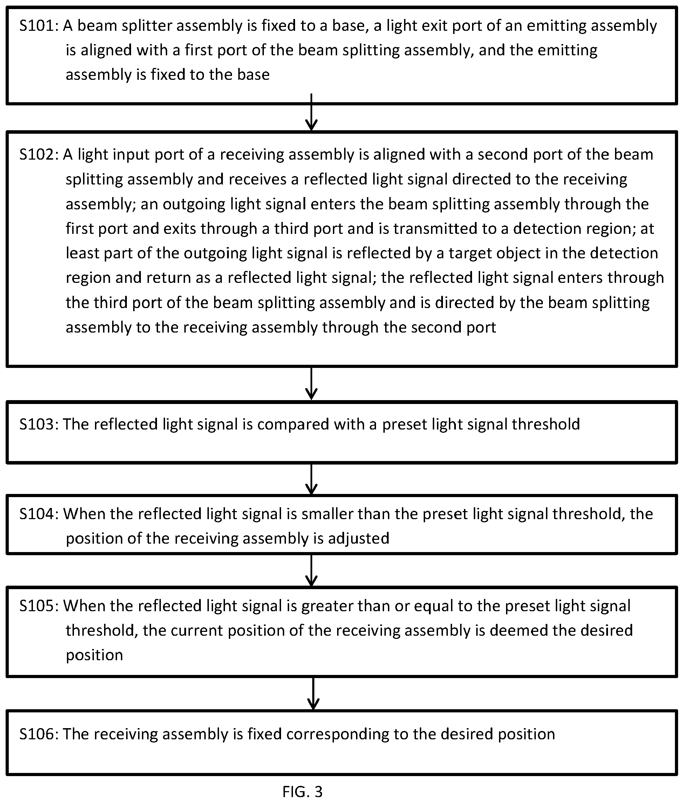

Embodiments of the present application may provide a lidar adjustment method as shown in FIG. 3, the method may include the following steps:

S101, the beam splitting assembly and the base are an integrated structure or are fixedly connected. Aligning a light exit port of the emitting assembly with a first port of the beam splitting assembly; and then fixedly mounting the emitting assembly on the base.

Specifically, during installation and adjustment of the transceiver component 10, the beam splitting assembly and the base are an integrated structure or are fixedly connected to each other in a non-detachable manner. The light exit port of the emitting assembly is aligned with the first port of the beam splitting assembly. The emitting assembly may then be fixed on the base. The connection may be a snap connection, a screw connection, a connection through pin (s), an adhesive connection, or any combinations thereof.

S102, alighting a light input port of the receiving assembly with a second port of the beam splitting assembly to receive and direct the reflected light signal towards the receiving assembly. Specifically, the outgoing light signal emitted by the emitting assembly enters the first port of the beam splitting assembly, exits from the third port of the beam splitting assembly, and travels to a detection region, where at least a part of the outgoing light signal is reflected by a target object. The reflected light signal then enters the third port of the beam splitting assembly. The reflected light signal is then deflected by the beam splitting assembly and directed towards the receiving assembly.

In some embodiments, before the adjustment of the lidar, a known target object can be disposed in the detection region. The distance between the known target object and the lidar is known.

Specifically, the detector of the receiving assembly may be used to obtain the reflected signal, the outgoing light signal emitted by the emitting assembly enters the beam splitting assembly via the first port thereof and exits from the third port thereof, and then travels to the detection region, where it is reflected by the target object located therein. The reflected light signal then enters the beam splitting assembly via the third port thereof, exits via the second port thereof, and then travels towards the receiving assembly. A detector of the receiving assembly is configured to receive the reflected light signal. The emitting optical path and the receiving optical path between the beam splitting assembly and the target object are coaxial.

S103, the reflected light signal is compared with a preset light signal threshold.

The preset light signal threshold may be a preset voltage threshold or a preset current threshold.

Specifically, after obtaining the reflected light signal, the detector of the receiving assembly may convert the reflected light signal into a voltage signal or a current signal, which may be compared with a preset voltage signal threshold or a preset current threshold.

S104, when the reflected light signal is lower than the preset light signal threshold, adjust the position of the receiving assembly.

For example, the reflected light signal is converted to a voltage signal by the detector of the receiving assembly. If the voltage signal is lower than the preset voltage signal threshold, the position of the detector is adjusted in the transceiver component 10, so the position of the receiving assembly is adjusted such that the voltage signal obtained by the detector meets the requirement.

S105, when the reflected light signal is greater or equal to the preset light signal threshold, the current position of the receiving assembly may be determined as the desired position of the receiving assembly.

The desired position may indicate the position on which the receiving assembly is fixed. In this position, the receiving assembly has a good receiving performance.

Referring back to the example of converting the reflected light signal to a voltage signal on the detector, when the comparison result of the detector shows that the voltage signal is greater than or equal to the preset light signal threshold, the current position of the detector is determined as a desired position of the detector, also the current position of the receiving assembly is determined as a desired position of the receiving assembly.

S106, the receiving assembly may be fixedly mounted based on the desired position of the receiving assembly.

Specifically, the receiving assembly may be fixed on the beam splitting assembly based on the desired position of the receiving assembly. The connection between the receiving assembly and the beam splitting assembly may be a snap connection, a screw connection, a connection through pin (s), an adhesive connection, or any combinations thereof.

The lidar provided in this embodiment includes at least one transceiver component, which includes an emitting assembly, a beam splitting assembly, and a receiving assembly, and when the lidar detects a target area, the outgoing light signal from the emitting assembly is emitted to a detection region after passing through the beam splitting assembly, and the reflected light signal is reflected by the target object in the detection region, and the reflected light signal is deflected by the beam splitting assembly and received by the receiving assembly. During installation and adjustment of the lidar, the beam splitting assembly and the base are an integrated structure or fixedly connected, the light exit port of the emitting assembly may be aligned with the first port of the beam splitting assembly and the emitting assembly may be fixed on the base. The light input port of the receiving assembly may be aligned with the second port of the beam splitting assembly to receive the reflected light signal, and compare the reflected light signal with the preset light signal threshold. When the reflected light signal is lower than the preset light signal threshold, the position of the receiving assembly may be adjusted. When the reflected light signal is greater than or equal to the preset light signal threshold, the current position of the receiving assembly may be determined as the desired position of the receiving assembly. The lidar includes at least one transceiver component, and the emitting assembly, beam splitting assembly, receiving assembly of each transceiver component may be pre-tuned before assembly, constituting a tuned transceiver component. During the assembly of lidar, a plurality of transceiver components may be spliced and the required field of view angle of the lidar may be met. The assembly process is simple and fast. When replacing a damaged emitting assembly or receiving assembly during maintenance, only the damaged part needs to be replaced and the corresponding transceiver module needs to be adjusted, so it is easy to maintain the product and reduce maintenance cost. At the same time, each transceiver component can be installed and adjusted separately to ensure that each transceiver component can emit and receive well, and thus the detection effect of lidar can be reliably guaranteed.

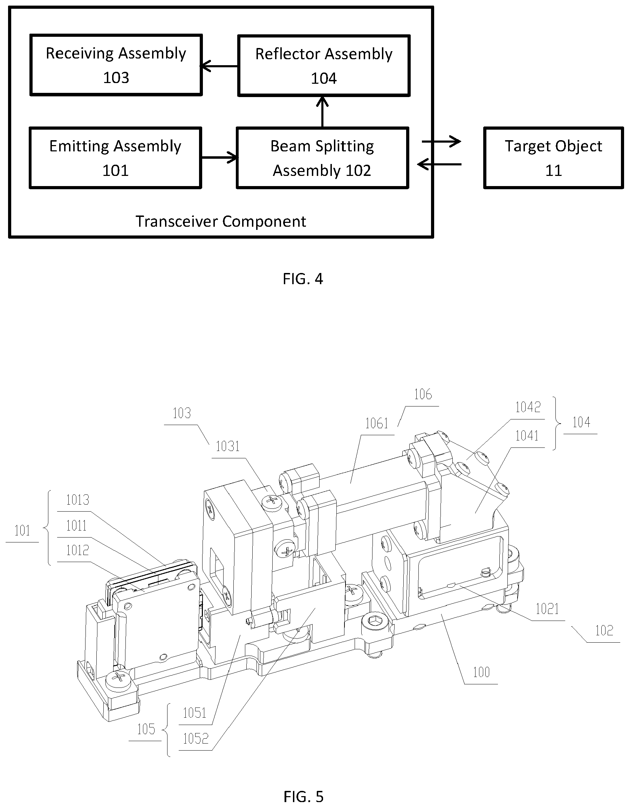

Referring to FIG. 4, a lidar of some embodiments of the present application is provided, based on the embodiments above, the transceiver component may include a reflector assembly 104. The reflector assembly 104 may be positioned between the beam splitting assembly 102 and the receiving assembly 102, so that after passing through the beam splitting assembly 102, the reflected light signal may be further reflected by the reflector assembly 104 and emitted towards the receiving assembly 103.

The reflected light signal after being reflected by the reflector assembly 104 may have a first optical axis. The outgoing light signal after passing though the beam splitting assembly 102 may have a second optical axis. The first optical axis and the second optical axis may be parallel or may form an angle, as long as the reflected light signal enters the receiving assembly 103. The reflector assembly 104 may be configured to fold or change the optical path of the receiving light signal so as to reduce the volume of the transceiver component 10.

Specifically, the outgoing light signal emitted by the emitting assembly 101 is emitted to a detection region after passing through a beam splitting assembly 102. At least part of the outgoing light signal may then be reflected by a target object in the detection region and become the reflected light signal. The reflected light signal may subsequently be incident into the beam splitting assembly 102, be deflected or directed to the reflector assembly 104, then be reflected or directed by the reflector assembly 104 and emitted towards the receiving assembly 103, and finally be received by the receiving assembly 103.

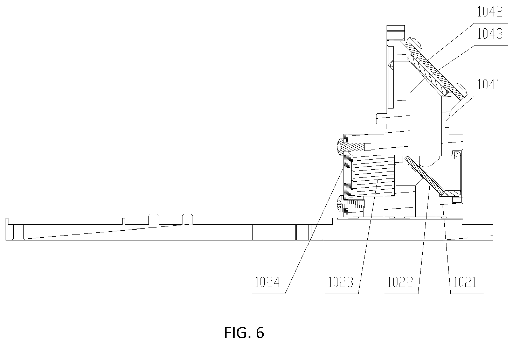

As shown in FIG. 5 and FIG. 6, the lidar may further include a base 100. At least one transceiver component 10 may be fixed on the base 100 based on an installation angle. In some embodiments, each transceiver component 10 may be installed on the base 100 and have a corresponding installation angle, each transceiver component 10 may be installed on the base 100 based on the installation angle. In addition, the material and shape of the base 100 may be determined according to actual use, which is not limited in this application.

The emitting assembly 101 may be fixedly connected to the base 100 and may be aligned with the beam splitting assembly 102. Specifically, during installation, the emitting assembly 101 may first be aligned with the beam splitting assembly 102 so that the outgoing light signal emitted from the emitting assembly 101 may be directed towards the beam splitting assembly 102, and the emitting assembly 101 may then be fixed to the base 100. In addition, the connection between the emitting assembly 101 and the base 100 may use one or more of a snap connection, a screw connection, a connection through pin (s), an adhesive connection, and any combinations thereof.

The emitting assembly 101 may include an emission board supporting assembly and an emission board 1011. The emission board 1011 may be fixed by the emission board supporting assembly. The emission board supporting assembly may further include an emission board adjustment cover 1013 and an emission board adjustment base 1012. The emission board 1011 may be sandwiched between the emission board adjustment cover 1013 and the emission board adjustment base 1012. After the emission board 1011 is aligned with the beam splitting assembly 102, the emission board adjustment 1012 may be fixed on the base 100. In some embodiments, the emission board 1011 may be sandwiched between the emission board adjustment cover 1013 and the emission board adjustment base 1012, then the clamped emission board 1011 may be placed in an emission board mounting position on the based 100 for adjustment. When the adjustment is completed, the emission board adjustment base 1012 may be fixed with the base 100. In addition, the connection between the emission board adjustment base 1012 and the base 100 may be a snap connection, a screw connection, a connection through pin(s), an adhesive connection, or any combinations thereof.

The transceiver component 10 may further include a collimation assembly 105. The collimating assembly 105 may be disposed between the emitting assembly 101 and the beam splitting assembly 102. Therefore, after the outgoing light signal is emitted by the emitting assembly 101, the collimating assembly 105 may collimate the outgoing light signal and direct it to the beam splitting assembly 102. The collimating assembly 105 may include a fast axis collimating lens, a slow axis collimating lens, a fast axis collimator barrel 1051, and a slow axis collimator holder 1052. The fast axis collimating lens may be placed in the fast axis collimator barrel 1051, which is fixed on the base 100. The slow axis collimating lens may be placed in the slow axis collimator holder 1052, which is also fixed on the base 100 next to and aligned with the fast axis collimator barrel 1051. The slow axis collimator and the emitting assembly 101 may be fixed on the base 100 after aligning the slow axis collimator and the emitting assembly 101 with the fast axis collimator. The connection between the fast axis collimator barrel 1051 and the base 100 may be a snap connection, a screw connection, a connection through pin (s), an adhesive connection, or any combination thereof. The connection between the slow axis collimator holder 1052 and the base 100 may be a snap connection, a screw connection, a connection through pin (s), an adhesive connection, or any combinations thereof.

The beam splitting assembly 102 may include a beamsplitter supporting assembly 1021 and a beamsplitter 1022. The beamsplitter supporting assembly 1021 and the base 100 may be formed as an integrated structure or fixedly connected. The beamsplitter 1022 may be fixed by the beamsplitter supporting assembly 1021. The beamsplitter supporting assembly 1021 may be of a cubic structure (e.g., a cubic housing). The beamsplitter supporting assembly 1021 may include a mounting position inside the housing, so that the beamsplitter 1022 may be mounted on and fixed to the mounting position at a preset tilt angle and position. Optionally, the beamsplitter supporting assembly 1021 may be a structural part preset with a tilt angle same to the reflector, The beamsplitter supporting assembly 1021 and the base 100 may be formed as an integrated structure or fixedly connected to ensure the position accuracy of installation when installing the splitter 1022. The material of the beamsplitter supporting assembly 1021 may be the same as the base. When installing the beamsplitter, installing the beamsplitter on the beamsplitter supporting assembly 1021. The connection between the beamsplitter 1022 and the beamsplitter support assembly 1021 may be a snap connection, a screw connection, an adhesive connection, or any combinations thereof. The beamsplitter can be a polarizing beamsplitter, a reflector with a central opening, a semi-transmissive and semi-reflective mirror, etc.

The beam splitting assembly 102 may further include a secondary beamsplitter 1023 placed between the beamsplitter 1022 and the collimating assembly 105.The second beamsplitter 1023 may be fixed by the beamsplitter supporting assembly 1021. The beamsplitter supporting assembly 1021 may be provided with an installation position of the secondary beamsplitter 1023. The secondary beamsplitter 1023 may be set in the beamsplitter supporting assembly 1021 at a preset inclination angle and position through the secondary beamsplitter mounting position, and fixed by the pressing block 1024. Optionally, the secondary beamsplitter 1023 may be a polarization beamsplitter (PBS) to filter out the S-polarized laser beam. Adding the secondary beamsplitter 1023 in the beam splitting assembly 102 can reduce the intensity of the outgoing signal light passing through to the beamsplitter 1022, thereby reducing local heating. Since the secondary beamsplitter 1023 filters out the S polarized light, the S-polarized light is directed away from the receiving assembly 103, and undesired effects caused by the S-polarized light to the receiving assembly 103 are minimized. Certainly, one of ordinary skill in the art would understand that without the secondary beamsplitter 1023, the transceiver component 10 may still emit and receive the laser beam and reach its design requirements of signal detection. However, having the secondary beamsplitter 1023 may eliminate the effects of the S-polarized light signal to the receiving assembly 103 and improve the detection performance and detection accuracy of the transceiver component 10.

The reflector assembly 104 may include a reflector supporting assembly 1041 and a reflector 1043. The reflector 1043 may be fixed by the reflector supporting assembly 1041. The reflector assembly 104 may include at least one reflector, the reflector may be a flat mirror, a cylindrical mirror, an aspheric curvature mirror, or the like. Additionally, the reflector 104 may further includes a mirror cover 1042. The reflector 1043 may be fixed on the mirror cover 1042. The mirror cover 1042 may be fixedly connected to the reflector supporting assembly 1041, so as to fix the reflector 1043 within the reflector assembly 104. The connection between the mirror cover 1042 and the reflector supporting assembly 1041 may be a snap connection, a screw connection, a connection through pin (s), an adhesive connection, and any combinations thereof.

The receiving assembly 103 may be fixedly connected with the reflector supporting assembly 1041 after alignment. Specifically, the receiving assembly 103 may include a receiving board (not shown in the figure), a receiving board base 1031. The receiving board may be fixed by the receiving board base 1031. Specifically, the transceiver component 10 may further include a focusing assembly 106, the focusing assembly 106 may be place between the receiving assembly 103 and the reflector assembly 104. The reflected light signal may be directed to the receiving assembly after being converged by the focusing assembly 106. The focusing assembly 106 may include a focusing lens barrel 1061 and a focusing lens (not shown in the figure). The focusing lens may be placed in the focusing lens barrel 1061. One end (i.e., "the first end") of the focusing lens barrel 1061 may be aligned with a light exit port of the reflector assembly 104, and the other end (i.e., "the second end") of the focusing lens barrel 1061 may be aligned with a light input port of the receiving assembly 103. In some embodiments, the connection of the receiving assembly 103 and the focusing assembly 106, the connection of the reflector assembly 104 and the focusing assembly 106 may use one or more of a snap connection, a screw connection, a connection through pin (s), an adhesive connection, and any combinations thereof. The receiving board of the receiving assembly 103 may be used to obtain the reflected light signal. The receiving board may include a detector, such as an APD, an APD array, a MPPC, a SPAD, a PMT, a SIPM, or other detectors. The optical paths of the outgoing light signal and the reflected light signal are coaxial.

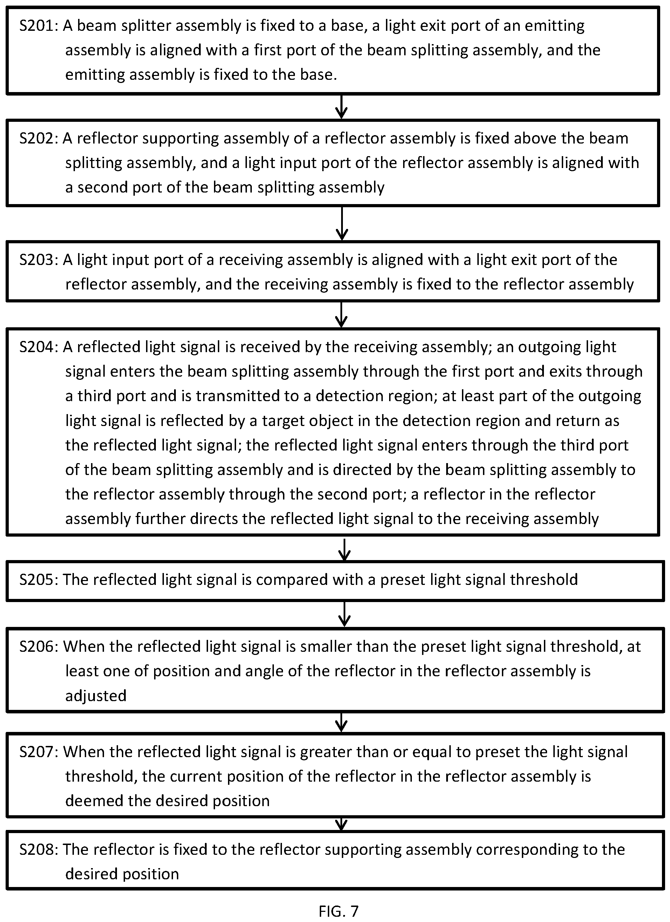

FIG. 7 is a lidar adjustment method according to some embodiments of the present application. As shown in FIG. 7, the adjustment method may include the following steps:

S201, the beam splitting assembly and the base may be an integrated structure or fixedly connected, and aligning a light exit port of the emitting assembly with a first port of the beam splitting assembly, and then fixing the emitting assembly to the base.

Specifically, when the transceiver component is being adjusted, the beam splitting assembly and the base are an integrated structure or fixedly connected. The light exit port of the emitting assembly is aligned with the first port of the beam splitting assembly. The emitting assembly may then be is fixed on the base. The connection therebetween may be a snap connection, a screw connection, a connection through pin(s), an adhesive connection, or any combinations thereof. S201 may include:

S2011, the beam splitting assembly and the base may be an integrated structure or fixedly connected together, a fast axis collimator is fixed to the base through a fast axis collimator barrel, and the fast axis collimator is disposed in the fast axis collimator barrel.

S2012, an emission board is fixedly held by an emission board adjustment cover and an emission board adjustment base, the fixedly held emission board is placed in an emission board mounting position on the base, and the position of the emitting assembly is adjusted so that the outgoing light signal emitted by the emitting assembly is aligned with the first port of the beam splitting assembly after passing through the fast axis collimator.

A slow axis collimator is provided on the optical path between the emitting assembly and the beam splitting assembly, and the slow axis collimator is mounted on a slow axis collimator holder, then at least one of the position of the slow axis collimator and/or the position of the emission board is adjusted so that the outgoing light signal emitted from the emitting assembly is aligned with the first port of the beam splitting assembly after passing through the fast axis collimator and the slow axis collimator. In this case, the outgoing light signal is a substantially parallel collimated light.

S2014, the emission board adjustment base and the slow axis collimator holder are fixedly connected to the base to complete the installation of the emitting assembly and the slow axis collimator.

Specifically, the connection between the fast axis collimator barrel and the base, the connection between the slow axis collimator holder and the base, and the connection between the emission board adjustment base and the base may be snap connections, screw connections, connection through pin(s), adhesive connections, or any combinations thereof.

S202, fixing the reflector supporting assembly of the reflector assembly above the beam splitting assembly, and aligning a light input port of the reflector assembly with the second port of the beam splitting assembly.

Specifically, after the emitting assembly, the beam splitting assembly, and the collimating assembly are installed, the reflector supporting assembly of the reflector assembly is fixed above the beamsplitter supporting assembly of the beam splitting assembly, and the light input port of the reflector assembly is aligned with the second port of the beam splitting assembly. The connection between the reflector supporting assembly and the beamsplitter supporting assembly may a snap connection, a screw connection, a connection through pin(s), an adhesive connection, or any combinations thereof.

S203, aligning the light input port of the receiving assembly with the light exit port of the reflector assembly, and then fixing the receiving assembly to the reflector assembly.

Specifically, after the reflector assembly is installed, the light input port of the receiving assembly is aligned with the light exit port of the reflector assembly, and then the receiving assembly is fixed to the reflector assembly. Step S203 may include:

S2031, a focusing assembly is further provided on the optical path between the receiving assembly and the reflector assembly. At least one focusing lens is placed in a focusing lens barrel.

S2032, one end of the focusing lens barrel is aligned with the light exit port of the reflector assembly, and is fixedly connected to the reflector supporting assembly; a light input port of the receiving assembly is aligned with the other end of the focusing lens barrel, and the receiving board is fixed to the receiving board base. The position of the receiving board base may be adjusted so that the receiving board is perpendicular to the optical axis of the focusing lens barrel.

S2033, the receiving board base and the focusing lens barrel are fixedly connected, so as to finish the fixation of the reflector assembly, the focusing assembly and the receiving assembly.

Specifically, the connection between the reflector supporting assembly and the focusing lens barrel, and the connection between the receiving board base and the focusing lens barrel may be snap connections, screw connections, connection through pin(s), adhesive connections, or any combinations thereof.

S204, receiving the reflected light signal emitted towards the receiving assembly.

Receiving the reflected light signal emitted towards the receiving assembly. Specifically, an outgoing light signal emitted by the emitting assembly enters the first port of the beam splitting assembly and exits from a third port thereof, and is directed towards a detection region. At least part of the outgoing light signal is reflected by the target object in the detection region to become a reflected light signal, the reflected light signal then enters the third port of the beam splitting assembly, then is deflected by the beam splitting assembly, and exits from the second port thereof. The reflected light signal is reflected by the reflector assembly and emitted towards the receiving assembly.

Before adjustment, a known target object may be preset in the detection region, and the distance between the target object and the lidar is known.

The reflected light signal is obtained by a detector on a receiving board of the receiving assembly, and then converted into an electrical signal output by the detector. Specifically, the receiving board may be at least one of APD and SiPD. The optical paths of the outgoing light signal and the reflected light signal between the beam splitting assembly and the target object are coaxial.

S205, Comparing the reflected light signal with a preset light signal threshold.

The preset light signal threshold may be a preset voltage signal threshold or a preset current signal threshold.

Specifically, after obtaining the reflected light signal, the detector may convert the reflected light signal into a voltage signal or a current signal; and then the voltage signal may be compared with a preset voltage signal threshold, or the current signal may be compared with a preset current signal threshold.

S206. When the reflected light signal is lower than the preset light signal threshold, adjusting at least one of a position of the reflector or an angle of the reflector.

For example, the reflected light signal is converted to a voltage signal by detector in the receiving assembly. When the comparison result shows that the voltage signal is lower than the preset voltage signal threshold, the position and angle of the reflector in the reflector assembly may be adjusted to compensate for the errors accumulated in the previous steps. The angle, distance or the like of the reflector may be adjusted to make the voltage signal output by the receiving assembly meet the requirements. According to an embodiment, the reflector is fixed on a reflector cover, so the reflector may be adjusted by means of adjusting the reflector cover.

S207, when the reflected light signal is greater than or equal to the preset light signal threshold, determining that the current position of the reflector as the desired position of the reflector and the current angle of the reflector as the desired angle of the reflector.

In some embodiments, the desired position may indicate the position on which the reflector is fixed, the reflector may have a good receiving performance at the desired position.

Accordingly, when the reflector 1043 is properly positioned as described above, the receiving assembly 103 has a good receiving performance.

In the foregoing example where the reflected light signal is converted to a voltage signal on the receiving board of the receiving assembly, when the comparison result is that the voltage signal is greater than or equal to the preset voltage signal threshold, the current position of the reflector is marked as a desired position of the reflector.

S208, according to the desired position of the reflector, fixedly mounting the reflector on the reflector supporting assembly corresponding to the desired position.

Specifically, the reflector may be fixed on the mirror cover, the mirror cover may be fixed on the reflector supporting assembly based on the desired position of the reflector. In some embodiments, the mirror cover may be connected with the reflector supporting assembly via adhesive, the reflector after adjustment may be fixed based on the desired position of the reflector.

The lidar provided in the embodiments of the present application, the transceiver component may further include a reflector assembly, the reflected light signal of the embodiments may be emitted towards the reflector assembly after passing through the beam splitting assembly. The reflected light signal may be emitted towards the receiving assembly after being reflected by the reflector assembly. In some embodiments of the present application, the reflector assembly may be used to reflect the reflected light signal, the receiving optical path may be folded and shrunk, so the volume of the transceiver component may be reduced, further reducing the volume of the lidar.

During installation and adjustment of the lidar, the beam splitting assembly and the base are an integrated structure or fixedly connected, the light exit port of the emitting assembly may be aligned with the first port of the beam splitting assembly and the emitting assembly may be fixed on the base based on the position of the beam splitting assembly. The reflector supporting assembly of the reflector assembly may be fixedly connected with the beamsplitter supporting assembly of the beam splitting assembly. The light input port of the reflector assembly may be aligned with the second port of the beam splitting assembly, the light input port of the receiving assembly may be aligned with the light exit port of the reflector assembly and the receiving assembly may be fixedly connected with the reflector assembly. The receiving assembly may receive the reflected light signal, and compare the reflected light signal with the preset light signal threshold. When the reflected light signal is lower than the preset light signal threshold, the position and the angle of the reflector assembly may be adjusted. When the reflected light signal is greater than or equal to the preset light signal threshold, the current position of the reflector assembly may be determined as the desired position of the reflector assembly. The lidar includes at least one transceiver component, and the emitting assembly, beam splitting assembly, reflector assembly, receiving assembly of each transceiver component may be pre-tuned before assembly, constituting a tuned transceiver component. During the assembly of lidar, a plurality of transceiver components may be spliced and the required field of view angle of the lidar may be met. The assembly process is simple and fast. When replacing a damaged emitting assembly or receiving assembly during maintenance, only the damaged part needs to be replaced and the corresponding transceiver module needs to be adjusted, so it is easy to maintain the product and reduce maintenance cost. At the same time, each transceiver component can be installed and adjusted separately to ensure that each transceiver component can emit and receive well, and thus the detection effect of lidar can be reliably guaranteed. Further, the reflector assembly may fold the receiving optical path of the transceiver component, thus the hardware used by this method may further reduce the volume of the lidar.

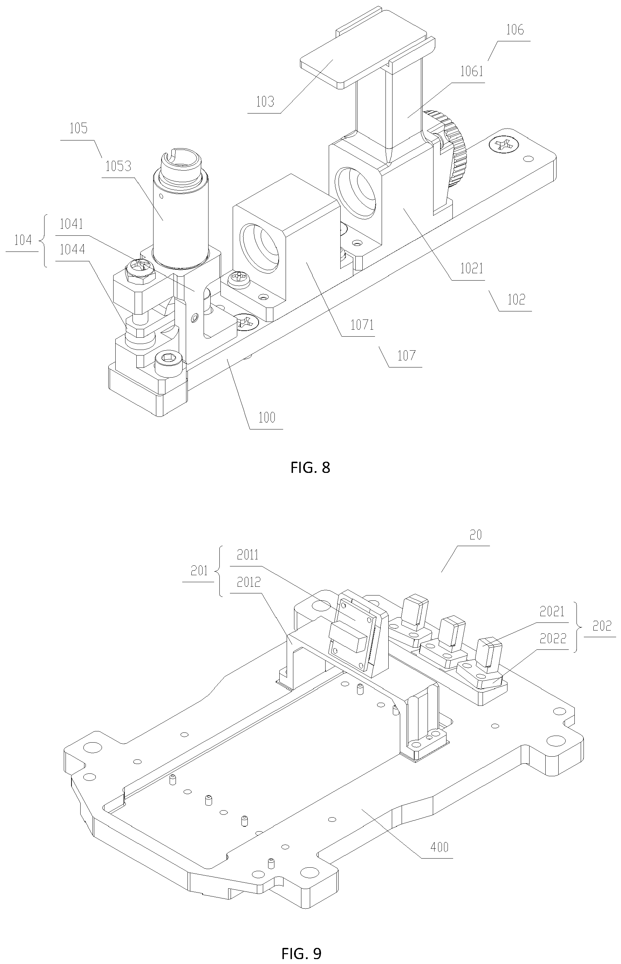

FIG. 8 is a schematic structural diagram of a lidar according to some embodiments of the present application. Based on the embodiments above, the transceiver component 10 may further include a reflector assembly 104 placed between the emitting assembly 101 and the beam splitting assembly 102, the outgoing light signal emitted by the emitting assembly 101 may be directed to the beam splitting assembly 102 after being reflected by the reflector assembly.

Specifically, the outgoing light signal passing through the reflector assembly may enter into the beam splitting assembly 102, folding and compression of the receiving optical path is realized to reduce the occupied space length and the occupied volume. Specifically, the outgoing light signal emitted by the emitting assembly may be emitted towards the beam splitting assembly 102 after passing through the reflector assembly, and emitted to a detection region after passing through the beam splitting assembly. At least a part of the outgoing light signal is reflected by a target object in the detection region; the reflected light signal enters the beam splitting module and emits towards the receiving assembly 103, and is received by the receiving assembly 103.

The transceiver component 10 may further include a base 100. At least one transceiver component 10 may be fixed on the base 100 based on an installation angle. When installed, each of the at least one transceiver component 10 may correspond to an installation angle. In addition, the material and shape of the base 100 may be determined according to actual use, which is not limited in this disclosure.

The reflector assembly 104 and the beam splitting assembly 102 may be fixed on the base 100 after being aligned with each other. The emitting assembly 101 may be fixedly connected with the reflector assembly 104 after being aligned with the reflector assembly 104. The receiving assembly 103 may be fixedly connected with the beam splitting assembly 102 after being aligned with the beam splitting assembly 102. When fixedly connecting the reflector assembly 104 and the beam splitting assembly 102 on the base 100, the reflector assembly 104 may be aligned with the beam splitting assembly 102, so the outgoing light signal emitted by the emitting assembly 101 may be directed to the beam splitting assembly 102 after being reflected by the reflector assembly 104, then the reflector assembly 104 and the beam splitting assembly may be fixed. The connection of reflector assembly 104 and the base 100, the connection of beam splitting assembly 102 and the base 100 may use one or more of a snap connection, a screw connection, a connection through pin(s), an adhesive connection, and any combinations thereof.

Specifically, the reflector assembly 104 may include a reflector 1043, a reflector supporting assembly 1041, and an adjusting member 1044. The reflector 1043 may be mounted on the reflector supporting assembly 1041. The adjusting member 1044 may be configured to adjust the position and angle of the reflector 1043. The reflector 1043 may be fixed on the base 100 through the reflector supporting assembly 1041. In addition, the connection between the reflector supporting assembly 1041 and the base 100 may be a snap connection, a screw connection, a connection through pin (s), an adhesive connection, and any combinations thereof.

The emitting assembly 101 may include an incident fiber for introducing a laser beam.

The transceiver component 10 may further include a collimating assembly 105. The collimating assembly 105 may be placed between the emitting assembly 101 and the reflector assembly 104. The outgoing light signal emitted by the incident fiber can be collimated through the collimating assembly 105 and then emitted to the reflector assembly 104. Specifically, the collimating assembly 105 may include a collimating lens barrel 1053 and at least one collimating lens (not shown in the figure) in the collimating lens barrel 1053. The incident fiber may be aligned with the light input port of the collimator lens barrel 1053. The light exit port of the collimating lens barrel 1053 may be aligned with the light input port of the reflector assembly 104. The collimating lens barrel may be fixed on a reflector supporting component, and the outgoing light signal may be directed to the reflector assembly 104 after passing through the collimating assembly 105.

The beam splitting assembly 102 may include a beamsplitter supporting assembly 1021 and beamsplitter 1022. The beamsplitter supporting assembly 1021 may be formed as part of the base 100 or may be fixedly connected to the base 100. The beamsplitter 1022 may be mounted and fixed in the beamsplitter supporting assembly 1021. The beamsplitter supporting assembly 1021 may be of a cubic structure (e.g., a cubic housing). The beamsplitter supporting assembly 1021 may include a mounting position inside the housing, so that the beamsplitter 1022 may be mounted on and fixed to the mounting position at a preset tilt angle and position. For example, the mounting position of the beamsplitter supporting assembly 1021 may include a mounting surface being pre-built with the preset tilt angle, so that when installed, the beamsplitter 1022 is placed and fixed to the mounting surface. The beamsplitter supporting assembly 1021 and the base 100 may be formed as an integrated structure or fixedly connected with each other to ensure accuracy of the positioning. The connection between the beamsplitter 1022 and the beamsplitter support assembly 1021 may be a snap connection, a screw connection, an adhesive connection, or any combinations thereof. Additionally, the material of the beamsplitter supporting assembly 1021 may be the same as or different from the material of the base 100. The beamsplitter can be a polarizing beamsplitter, a reflector with a central opening, a semi-transmissive and semi-reflective mirror, etc.

The transceiver component may further include a secondary beam splitting assembly 107. The second beam splitting assembly 107 may be placed between the reflector assembly 104 and the beam splitting assembly 102. The secondary beam splitting assembly 107 may include a secondary beamsplitter supporting assembly 1071 and a secondary beamsplitter (not shown in the figure). The secondary beamsplitter supporting assembly 1071 may be a cubic structure (e.g., a cubic housing). The secondary beam splitting supporting assembly 1071 may include a secondary beamsplitter mounting position to fix the secondary beamsplitter at a preset tilt angle and position. Accordingly, when installed, the secondary beamsplitter may be placed and mounted to the correspondingly secondary beamsplitter supporting assembly 1071. The secondary beamsplitter supporting assembly 1071 may be fixedly connected to the base 100. The features and functions of the secondary beam splitting assembly 107 are otherwise similar to those of secondary beamsplitter 1023. Adding the secondary beam splitting assembly 107 between the beam splitting assembly 102 and the reflector assembly 104 can reduce the intensity of the outgoing signal light passing through to the beamsplitter 1022, thereby reducing local heating. Since the secondary beam splitting assembly 107 filters out the S polarized light, the S-polarized light is directed away from the receiving assembly 103, and undesired effects caused by the S-polarized light to the receiving assembly 103 are minimized. Certainly, one of ordinary skill in the art would understand that without the secondary beam splitting assembly 107, the transceiver component 10 may still emit and receive the laser beam and reach its design requirements of signal detection. However, having the secondary beam splitting assembly 107may eliminate the effects of the S-polarized light signal to the receiving assembly 103 and improve the detection performance and detection accuracy of the transceiver component 10.

The receiving assembly 103 may be fixedly connected with the beam splitting assembly 102 after being aligned with the beam splitting assembly 102. Specifically, the transceiver component 10 may further include a focusing assembly 106, the focusing assembly 106 may be placed between the receiving assembly 103 and the beam splitting assembly 102. The reflected light signal may be directed to the receiving assembly 103 after being converged by the focusing assembly 106. The focusing assembly 106 may include a focusing lens barrel 1061 and a focusing lens (not shown in the figure). The focusing lens may be placed in the focusing lens barrel 1061. One end (i.e., "the first end") of the focusing lens barrel 1061 may be aligned with a light exit port of the beam splitting assembly 102, and the other end (i.e., "the second end") of the focusing lens barrel 1061 may be aligned with a light input port of the receiving assembly 103.

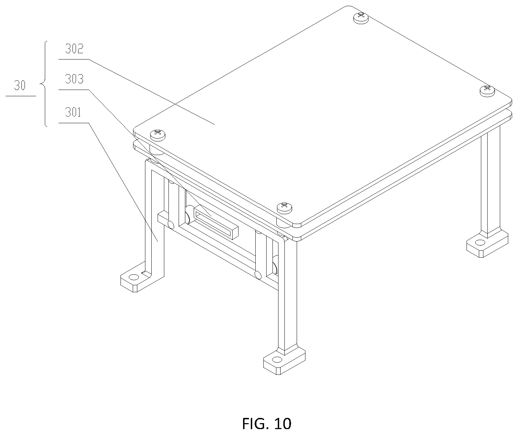

As shown in FIG. 9 and FIG. 10, the lidar may include a plurality of transceiver components 10. The lidar may also include a housing component 40, a hardware component 30 and a scanning component 20.

The housing component may include a cover and a bottom plate 400, the plurality of transceiver components 10, the hardware component 30, and the scanning component 20 are all disposed in a cavity enclosed by the cover and the bottom plate 400.

The hardware component 30 may include a base board 302, a control board 303, and a bracket 301. The bracket 301 includes a platform and a plurality of legs. The plurality of legs is evenly disposed below the platform to support the entire platform. The lower ends of the legs are fixedly connected to the bottom plate 400. Both the base board 302 and the control board 303 are fixed on the bracket 301.

The scanning component 20 includes a galvanometer assembly 201 and a reflector assembly 202. The galvanometer assembly 201 includes a galvanometer 2011 and a galvanometer support component 2012. The galvanometer 2011 is fixed on the bottom plate 400 through the galvanometer support component 2012. The reflector assembly 202 includes a plurality of reflectors 2021. The reflectors 2021 and the transceiver components 10 are disposed in a one-to-one correspondence. Each of the reflectors 2021 is fixedly connected to the bottom plate 400 through a reflector support component 2022.

An outgoing light signal of the transceiver component 10 is directed towards a corresponding reflector 2021; the outgoing light signal is reflected by reflector 2021 and directed towards the galvanometer 2011; the galvanometer 2011 directs the outgoing light signal to travel outwards for scanning; a reflected light signal from a target object is received by the galvanometer 2011 and then directed towards the reflector 2021; the reflector 2021 reflects the reflected light signal towards a corresponding optical transceiver component 10; so the transceiver component 10 receives the reflected light signal.

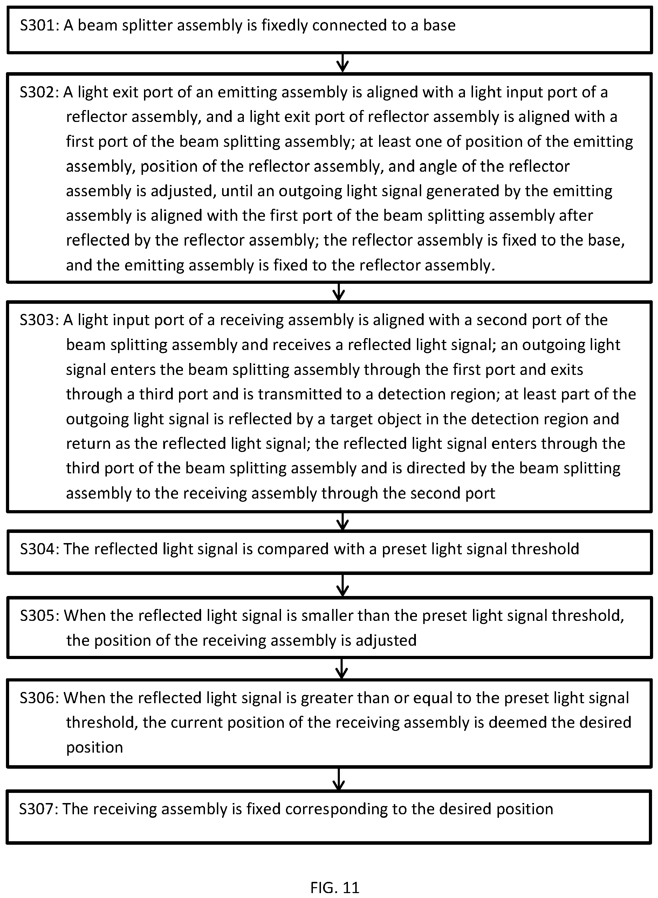

FIG. 11 is a lidar adjustment method according to some embodiments of the present application, the method may include the following steps:

S301, the beam splitting assembly and the base are an integrated structure or fixedly connected.

The beam splitting assembly and the base are an integrated structure or fixedly connected. Optionally, if a secondary beam splitting assembly is further included, the secondary beam splitting assembly is aligned with the beam splitting assembly, and then integrated or fixedly connected with the base.

S302, aligning the light exit port of the emitting assembly with the light input port of the reflector assembly; aligning the light exit port of the reflecting module with the first port of the beam splitting assembly; adjusting at least one of the position of the emitting assembly, the position of the reflector assembly, and the angle of the reflector assembly, so that the outgoing light signal from the emitting assembly is reflected by the reflector assembly towards the first port of the beam splitting assembly. Then fixing the reflector assembly to the base, and then fixedly mounting the emitting assembly to the reflector assembly.

Specifically, step S302 may further includes:

S3021, fixing a reflector on an adjusting member, and the adjusting member is assembled with the reflector supporting assembly.

S3022, a light exit of a collimator barrel of the collimating assembly is aligned with the reflector and fixed to the reflector supporting assembly; the incident fiber of the emitting assembly is aligned with the light input port of the collimator barrel.

S3023, the light exit port of the reflector assembly is aligned with the first port of the beam splitting assembly or the secondary beam splitting assembly, and the reflector supporting assembly is fixed to the base.

S3024, the angle and the position of the reflector is adjusted through the adjusting member, so that the outgoing light signal emitted by the emitting assembly passes through the collimating assembly towards the reflector. The outgoing light is then reflected by the reflector towards the first port of the beam splitting assembly or the secondary beam splitting assembly.

Specifically, the connection between the reflector supporting assembly and the base and the connection between the collimator barrel and the reflector supporting assembly may be snap connections, screw connections, connection through pin(s), adhesive connections, or any combinations thereof.

S303, aligning the light input port of the receiving assembly with the second port of the beam splitting assembly to receive the reflected light signal directed to the receiving assembly. Specifically, the outgoing light signal emitted by the emitting assembly enters the first port of the beam splitting assembly and exits from the third port thereof toward a detection region. At least a part of the outgoing light signal is reflected by a target object in the detection region; the reflected light signal enters the third port of the beam splitting module, is deflected by the beam splitting assembly, and then exits from the second port thereof towards the receiving assembly.

Specifically, step S303 may further includes:

S3031, a focusing assembly is provided on the optical path between the beam splitting assembly and the receiving assembly. At least one focusing lens is provided in the focusing lens barrel.

S3032, one end of the focusing lens barrel is aligned with the second port of the beam splitting assembly, and the focusing lens barrel is fixedly connected to the beamsplitter supporting assembly.

S3033, a light input port of the receiving assembly is aligned with the other end of the focusing lens barrel to obtain the reflected light signal directed towards the receiving assembly by the focusing assembly.

Before adjustment, a known target object may be preset in the detection region, and the distance between the target object and the lidar is known.

Specifically, an outgoing light signal emitted by the emitting assembly enters the first port of the beam splitting assembly and exits from a third port thereof, and is directed toward the detection region. The outgoing light signal may be reflected by the target object in the detection region. The reflected light signal then enters the third port of the beam splitting module, is deflected by the beam splitting assembly, and exits from the second port thereof toward the receiving assembly. The reflected light signal is then received by a detector on a receiving board of the receiving assembly and converted into an electrical signal output by the detector. Specifically, the receiving board may be at least one of APD and SiPD.

Specifically, the connection between the focusing lens barrel and the beamsplitter supporting assembly may be a snap connection, a screw connection, a connection through pin(s), an adhesive connection, or any combinations thereof.

S304, comparing the reflected light signal with a preset light signal threshold.

The preset light signal threshold may be a preset voltage signal threshold or a preset current signal threshold.

Specifically, after obtaining the reflected light signal, the detector may convert the reflected light signal into a voltage signal or a current signal; and then the voltage signal may be compared with a preset voltage signal threshold, or the current signal may be compared with a preset current signal threshold.

S305. When the reflected light signal is lower than the preset light signal threshold, adjusting the position of the receiving assembly.

For example, when the reflected light signal is converted to a voltage signal by the receiving assembly, if the voltage signal is lower than the preset voltage signal threshold, the position of the receiving assembly may be adjusted, until the voltage signal output by the receiving assembly 103 meets the requirements.

S306, when the reflected light signal is greater than or equal to the preset light signal threshold, determining that the current position of the receiving assembly is a desire position of the receiving assembly.

In the desired position, the receiving assembly has a good receiving performance. That is, the optical axis of the receiving assembly is substantially aligned with the optical axis of the focusing assembly.

In the foregoing example where the reflected light signal is converted to a voltage signal at the receiving assembly, when the comparison result obtained by the detector is that the voltage signal is greater than or equal to the preset voltage signal threshold, the current position of the receiving assembly is deemed the desired position of the receiving assembly.

S307, fixing the receiving assembly according to the desired position, such that the installation and adjustment of the entire transceiver component is completed.

When the field of view angle of a single transceiver component cannot meet the requirement, the lidar may be provided with a plurality of the transceiver components. The lidar may further include a bottom plate, a hardware component, a galvanometer assembly, and a reflector assembly, as shown in Figs 9 and 10. The adjustment method shown in FIG. 11 may further include the following steps (not shown in FIG. 14):

S308, a plurality of transceiver components after installation and adjustment may be placed on the installation positions of the bottom plate. A scanning component may be fixed on the bottom plate, a galvanometer may be fixed on the bottom plate by a galvanometer support component, a reflector may be fixed on the bottom by a reflector support component, each reflector may correspond to a transceiver component, the transceiver component may be adjusted so the outgoing light signal emitted by the transceiver component may be aligned with the corresponding reflector, the transceiver component may be fixedly connected with the bottom plate via the base.

S309, the base board and the control board of the hardware component may be fixed on the bracket, the bracket may be fixedly connected with the bottom plate.

S310, after the internal installation and adjustment are completed, the cover and the bottom place may be packaged after assembly.

According to a further embodiment, the transceiver component may further include a reflector assembly. The reflector assembly is used to reflect the outgoing light signal, and the outgoing light path is thus folded to become shorter. In this way, the volume taken the transceiver component may be reduced, and accordingly, the volume of the lidar is reduced as well.

In a lidar installation and adjustment process applicable to the embodiment of the present application, the beam splitting assembly and the base are an integrated structure or fixedly connected with each other; the light exit port of the emitting assembly is aligned with the light input port of the reflector assembly, the emitting assembly and the reflector assembly are fixed; the light exit port of the reflector assembly is aligned with the first port of the beam splitting assembly, the reflector assembly is fixed on the base; then the light input port of the receiving assembly is aligned with the second port of the beam splitting assembly, and the receiving assembly receives the reflected light signal. Next, the reflected light signal is compared with the preset light signal threshold; when the reflected light signal is lower than the preset light signal threshold, the position and the angle of the receiving assembly are adjusted. When the reflected light signal is greater than or equal to the preset light signal threshold, it is determined that the current position of the receiving assembly is the desired position of the receiving assembly; next the receiving assembly is fixedly installed according to the desired position of the receiving assembly.

The lidar includes at least one transceiver component. The emitting assembly, the beam splitting assembly, and the receiving assembly of each transceiver component may be adjusted before assembling lidar. After the transceiver component is adjusted, it may be mounted on the bottom plate as a whole. In addition, there is also a scanning component on the bottom plate. After being adjusted, both the transceiver component and the scanning component may be fixed to the bottom plate. Next, the hardware component is fixed to the bottom plate for internal adjustment. Finally, the cover and the bottom plate are assembled and packaged to complete the entire installation and adjustment of the lidar.

When the lidar is assembled, the plurality of transceiver components 10 are combined together to provide the field of view angle required by the lidar. The installation and adjustment process is simple and fast. When the emitting assembly or the receiving assembly needs to be replaced for maintenance, only the damaged part thereof needs to be replaced and then a corresponding transceiver component is readjusted. Accordingly, the emitting assemblies and the receiving assembly of other transceiver components do not need to be re-adjusted. In this way, the product maintenance becomes easier and has a lower cost. In addition, each transceiver component is individually adjusted, which ensures that the transmission and reception of each transceiver component is good, and thus the detection effect of the lidar can be reliably guaranteed.

The technical features of the embodiments described above may be combined in many different ways. In order to make the description concise, not every possible combination of the technical features in the above embodiments has been described herein. However, as long as there is no contradiction in the combination of these technical features, such a combination should be considered as within the scope disclosed in this specification. It should be noted that "in an embodiment," "for example," "another example," and the like in the present application are intended to illustrate the present application instead of limiting the present application.

The aforementioned embodiments are merely a few embodiments of the present disclosure. Their descriptions are specific and detailed, but should not be understood as the limitations on the scope of the present disclosure. It is appreciated by a person of ordinary skill in the art that many variations and improvements may be made without departing from the concept of the present disclosure, and these variations and improvements all fall within the scope of protection of the present application. Therefore, the scope of protection of the present application shall be defined by the appended claims.

## Claims

1. A lidar, **characterized in that**:
the lidar comprises at least one transceiver component,
the transceiver component comprises an emitting assembly, a beam splitting assembly, a receiving assembly;
the emitting assembly is configured to emit an outgoing light signal which, after passing through the beam splitting assembly, is emitted into a detection region where it is reflected by a target object to form a reflected light signal; and
wherein the reflected light signal, after being deflected by the beam splitting assembly, is received by the receiving assembly.

2. The lidar of claim 1, wherein:
the transceiver component further comprises a reflector assembly, and
the reflector assembly is disposed between the beam splitting assembly and the receiving assembly, the reflected light signal being directed to the receiving assembly after passing through the beam splitting assembly and being reflected by the reflector assembly.

3. The lidar of claim 2, the transceiver component further comprising a base;
the beam splitting assembly includes a beamsplitter supporting assembly and a beamsplitter,
the beamsplitter supporting assembly and the base are an integrated structure or fixedly connected, and
the beamsplitter is fixed by the beamsplitter supporting assembly.

4. The lidar of claim 2 or 3, wherein the reflector assembly comprises a reflector supporting assembly and a reflector, and wherein the reflector is fixed by the reflector supporting assembly.

5. The lidar of claim 4, wherein the reflector supporting assembly is fixedly connected with the beamsplitter supporting assembly after being aligned with the beamsplitter supporting assembly.

6. The lidar of claim 4, wherein the receiving assembly is fixedly connected with the reflector supporting assembly after being aligned with the reflector supporting assembly.

7. The lidar of claim 3, wherein the emitting assembly is fixedly connected to the base after being aligned with the beam splitting assembly.

8. The lidar of claim 7, wherein the emitting assembly comprises an emission board supporting assembly and an emission board, the emission board being fixed by the emission board supporting assembly.

9. The lidar of claim 8, wherein the emission board supporting assembly comprises an emission board adjustment cover and an emission board adjustment base, the emission board is clamped and fixed by the emission board adjustment cover and the emission board adjustment base; and
the emission board adjustment base is fixed on the base after aligning the emission board with the beam splitting assembly.

10. The lidar of claim 2, wherein the transceiver component further comprises a collimating assembly disposed between the emitting assembly and the beam splitting assembly, and
the outgoing light signal emitted by the emitting assembly is directed to the beam splitting assembly after being collimated by the collimating assembly.

11. The lidar of claim 10, wherein the transceiver further comprises a base, wherein
the collimating assembly includes a fast axis collimating lens and a slow axis collimating lens, the fast axis collimating lens and the base being an integrated structure or fixedly connected, and
the slow axis collimating lens and the emitting assembly are fixed on the base after being aligned with the fast axis collimating lens.

12. The lidar of claim 1, wherein the transceiver component further comprises a reflector assembly disposed between the emitting assembly and the beam splitting assembly, and
the outgoing light signal emitted by the emitting assembly is directed to the beam splitting assembly after being reflected by the reflector assembly.

13. The lidar of claim 12, wherein the lidar further comprises a base, wherein
the beam splitting assembly comprises a beamsplitter supporting assembly and a beamsplitter, the beamsplitter supporting assembly and the base being an integrated structure or fixedly connected, and
the beamsplitter is fixed by the beamsplitter supporting assembly

14. The lidar of claim 13, wherein the reflector assembly is fixedly connected with the base after being aligned with the beam splitting assembly;
the emitting assembly is fixedly connected with the reflector assembly after being aligned with the reflector assembly; and
the receiving assembly is fixedly connected with the beam splitting assembly after being aligned with the beam splitting assembly.

15. The lidar of claim 12, wherein the emitting assembly further comprises an incident fiber configured to direct laser;
the transceiver component further comprises a collimating assembly disposed between the emitting assembly and the reflector assembly; and
a light signal emitted by the incident fiber is directed to the reflector assembly after being collimated by the collimating assembly.

16. The lidar of claim 1, wherein the receiving assembly comprises at least one of APD, APD array, MPPC, SPAD, PMT, SIPM.

17. The lidar of claim 1, further comprising a bottom plate, wherein the at least one transceiver component is fixed on the bottom plate according to an installation angle.

18. The lidar of claim 17, wherein the lidar further comprises a galvanometer assembly, wherein the galvanometer assembly is fixed on the bottom plate.

19. The lidar of claim 17, wherein the lidar further comprises a hardware component, wherein the hardware component comprises a PCB board, a control board, and a bracket, wherein the backet is fixed on the bottom plate, wherein the PCB board is fixedly connected with the bracket, wherein the control board is fixedly connected with the bracket.

20. A lidar adjustment method, **characterized by**:
aligning a light exit port of an emitting assembly with a first port of a beam splitting assembly, the emitting assembly being fixed on a base, the beam splitting assembly and the base being an integrated structure or fixedly connected;
aligning a light input port of a reflector assembly with a second port of the beam splitting assembly, a reflector supporting assembly of the reflector assembly being fixed on top of the beam splitting assembly;
aligning a light input port of a receiving assembly with a light exit port of the reflector assembly;
receiving, by the receiving assembly, a reflected light signal, wherein an outgoing light signal from the emitting assembly is incident on the first port of the beam splitting assembly, exits from a third port of the beam splitting assembly, and emits to a detection region where it is reflected by a target object to form a reflected light signal, wherein the reflected light signal is incident on the third port of the beam splitting assembly and exits from the second port of the beam splitting assembly after being deflected by the beam splitting assembly, and wherein the reflected light signal is emitted towards the receiving assembly after being reflected by a reflector of the reflector assembly;
comparing the reflected light signal with a preset light signal threshold;
when the reflected light signal is lower than the preset light signal threshold, adjusting at least one of a position of the reflector, an angle of the reflector, or a position of the receiving assembly;
when the reflected light signal is greater than or equal to the preset light signal threshold, determining a current position of the reflector as a desired position of the reflector, a current angle of the reflector as a desired position of the reflector, a current position of the receiving assembly as a desired position of the receiving assembly;
mounting the reflector on the reflector supporting assembly based on the desired position and the desired angle of the reflector; and
connecting the receiving assembly with the reflector assembly based on the desired position of the receiving assembly.

21. The lidar of claim 20, wherein the beam splitting assembly and the base are an integrated structure or fixedly connected, wherein the light exit port of the emitting assembly is aligned with the first port of the beam splitting assembly, and wherein the emitting assembly is fixedly mounted on the base, the method further comprising:
fixing a fast axis collimating lens on the base and adjusting a position of the emitting assembly so that a light spot of the outgoing light signal is compressed to a preset state along the fast axis after the outgoing light signal emitted by the emitting assembly passes the fast axis collimating lens;
placing a slow axis collimating lens between the emitting assembly and the beam splitting assembly, adjusting at least one of the slow axis collimating lens or a position of an emission board so that a light spot of the outgoing light signal is compressed to a preset state along the slow axis after the outgoing light signal emitted by the emitting assembly passes the slow axis collimating lens; and
fixing the emitting assembly and the slow axis collimating lens on the base.

22. A lidar adjustment method, **characterized by**:
aligning a light exit port of an emitting assembly with a first port of a beam splitting assembly, the emitting assembly being fixed on a base, the beam splitting assembly and the base being an integrated structure or fixedly connected;
aligning a light input port of a receiving assembly with a second port of the beam splitting assembly to receive a reflected light signal emitting towards the receiving assembly, wherein an outgoing light signal from the emitting assembly is incident on the first port of the beam splitting assembly, exits from a third port of the beam splitting assembly, and emits to a detection region where it is reflected by a target object to obtain the reflected light signal, wherein the reflected light signal is incident on the third port of the beam splitting assembly, exits from the second port of the beam splitting assembly after being deflected by the beam splitting assembly, and is emitted towards the receiving assembly;
comparing the reflected light signal with a preset light signal threshold;
when the reflected light signal is lower than the preset light signal threshold, adjusting a position of the receiving assembly;
when the reflected light signal is greater than or equal to the preset light signal threshold, determining a current position of the receiving assembly as a desired position of the receiving assembly; and
mounting the receiving assembly based on the desired position of the receiving assembly.

23. A lidar adjustment method, the method comprising:
a beam splitting assembly and a base being an integrated structure or fixedly connected;
aligning a light exit port of a emitting assembly with a light input port of a reflector assembly, a light exit port of the reflector assembly being aligned a first port of the beam splitting assembly, adjusting at least one of a position of the emitting assembly, a position of the reflector assembly, or an angle of a reflector of the reflector assembly to align an outgoing light signal emitted by the emitting assembly and reflected by the reflector assembly with the first port of the beam splitting assembly, the reflector assembly being fixedly mounted on the base, the emitting assembly being fixedly mounted with the reflector assembly;
aligning a light input port of a receiving assembly with a second port of the beam splitting assembly to receive a reflected light signal emitting towards the receiving assembly; wherein an outgoing light signal from the emitting assembly is incident on the first port of the beam splitting assembly, outgoing from a third port of the beam splitting assembly, and emits to a detection region where it is reflected by a target object to obtain a reflected light signal, wherein the reflected light signal is incident on the third port of the beam splitting assembly, outgoing from the second port of the beam splitting assembly after being deflected by the beam splitting assembly, wherein the reflected light signal is emitted towards the receiving assembly;
comparing the reflected light signal with a preset light signal threshold;
when the reflected light signal is lower than the preset light signal threshold, adjusting a position of the receiving assembly;
when the reflected light signal is greater than or equal to the preset light signal threshold, determining a current position of the receiving assembly as a desired position of the receiving assembly;
mounting the receiving assembly based on the desired position of the receiving assembly.
